# EUROPEAN PATENT APPLICATION

(11) **EP 3 306 805 A1**
(43) Date of publication of application: **11.04.2018**
(21) Application number: 16803270.4
(22) Date of filing: 27.05.2016
(51) Int. Cl.: H02P 6/15

(54) **DC-BRUSHLESS-MOTOR CONTROL DEVICE**

(30) Priority: 29.05.2015 US 201562168009 P
(71) Applicant: Nidec Corporation, Kyoto-shi, Kyoto 601-8205 (JP)
(72) Inventor: NAKAMACHI,Nobuo, Kyoto-shi Kyoto 601-8205 (JP); HARA,Yasoya, Kyoto-shi Kyoto 601-8205 (JP)
(74) Representative: Stöckeler, Ferdinand
(86) International application number: PCT/JP2016/065780
(87) International publication number: WO 2016/194835

(57) **Abstract**

Provided is a DC-brushless-motor control device that supplies a current to windings of a stator of a three-phase DC brushless motor. The device controls conduction states of switching elements based on a plurality of states including a first state, a second state, a third state, and a fourth state, in order from a time point when a magnetic pole position detected by a magnetic pole position detection unit reaches a reference position, the first state in which both of the first switching element and the second switching element are in an OFF state, the second state in which the first switching element is maintained in an ON state and the second switching element is maintained in the OFF state, the third state in which both of the first switching element and the second switching element are in the OFF state, and the fourth state in which the first switching element is maintained in the OFF state and the second switching element is maintained in the ON state.

## Description

### Technical Field

The present invention relates to a DC-brushless-motor control device.

### Background Art

In the related art, a method of controlling a motor by PWM has been known (for example, PTL 1). In the method of controlling the motor disclosed in PTL 1, during an acceleration operation or a steady operation of the motor, only an upper stage or a lower stage of an inverter circuit is controlled by the PWM, and during a deceleration operation of the motor, the upper stage and the lower stage of the inverter circuit are controlled by the PWM.

### Citation List

### Patent Literature

PTL 1: Japanese Unexamined Patent Application Publication No. 2003-189667

### Summary of Invention

### Technical Problem

However, in the PWM, it is necessary to perform switching of the upper stage and the lower stage of the inverter circuit frequently. That is, since it is necessary to perform switching of an arm between an H state and an L state frequently, there is a problem in that a switching loss occurs.

The present invention has been made in consideration of the above-described circumstance, and an object of the present invention is to reduce the switching loss of a DC brushless motor.

### Solution to Problem

According to an embodiment of the present invention, there is provided a DC-brushless-motor control device that supplies a current to windings of a stator of a three-phase DC brushless motor, the device including: a three-phase bridge inverter unit that includes arms with each of phases, each of which switching elements are connected to each other in series and each of which a connection point between the switching elements is connected to one end of each of the windings; and a control unit that controls each of a conduction state of a first switching element among the switching elements and a conduction state of a second switching element among the switching elements based on a magnetic pole position detected by a magnetic pole position detection unit which detects a magnetic pole position of a rotor of the three-phase DC brushless motor, the first switching element being provided on one side of the connection point, the second switching element being provided on the other side of the connection point, and the switching elements being included in each of the arms, in which the control unit controls the conduction states of the switching elements based on a plurality of states including a first state, a second state, a third state, and a fourth state, in order from a time point when the magnetic pole position detected by the magnetic pole position detection unit reaches a reference position, the first state in which both of the first switching element and the second switching element are in an OFF state, the second state in which the first switching element is maintained in an ON state and the second switching element is maintained in the OFF state, the third state in which both of the first switching element and the second switching element are in the OFF state, and the fourth state in which the first switching element is maintained in the OFF state and the second switching element is maintained in the ON state.

### Advantageous Effects of Invention

According to the present embodiment, the arms with each of phases are controlled to be in the H state only once in one cycle of electric angles of the motor. That is, frequent switching is unnecessary, and thus it is possible to reduce a switching loss.

### Brief Description of Drawings

[Fig. 1] Fig. 1 is a diagram illustrating an example of an external view of a suction apparatus according to the present embodiment.
[Fig. 2] Fig. 2 is a diagram illustrating an example of a functional configuration of the suction apparatus according to the present embodiment.
[Fig. 3] Fig. 3 is a diagram illustrating an example of configurations of a three-phase bridge inverter unit and a three-phase DC brushless motor that are provided in the suction apparatus according to the present embodiment.
[Fig. 4] Fig. 4 is a diagram illustrating an example of a structure of the three-phase DC brushless motor.
[Fig. 5] Fig. 5 is a diagram illustrating an example of a voltage waveform of the three-phase bridge inverter unit.
[Fig. 6] Fig. 6 is a diagram illustrating an example of a relationship between a target rotation speed and a rotation speed of a rotor that is controlled by an MCU.
[Fig. 7] Fig. 7 is a diagram illustrating an example of a cycle of movement of a magnetic pole position detected by a magnetic pole position detection unit.
[Fig. 8] Fig. 8 is a diagram illustrating two operation modes of the MCU.
[Fig. 9] Fig. 9 is a waveform diagram illustrating an example of a waveform of single pulse control by a DC-brushless-motor control device.
[Fig. 10] Fig. 10 is a table illustrating an example of control states of arms by the DC-brushless-motor control device.
[Fig. 11] Fig. 11 is a waveform diagram illustrating another example of the waveform of the single pulse control by the DC-brushless-motor control device.
[Fig. 12] Fig. 12 is a table illustrating another example of the control states of the arms by the DC-brushless-motor control device.

### Description of Embodiments

Hereinafter, a suction apparatus 1 according to an embodiment of the present invention will be described with reference to the accompanying drawings.

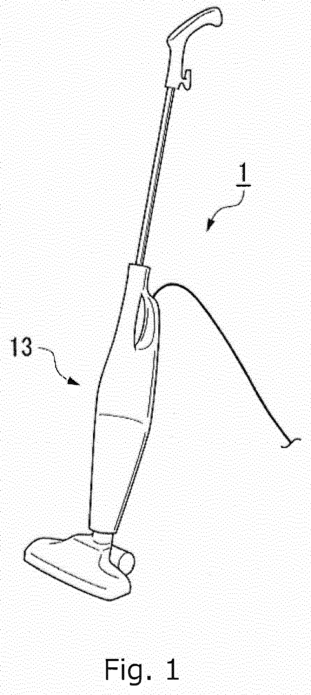

Fig. 1 is a diagram illustrating an example of an external view of the suction apparatus 1 according to the present embodiment. The suction apparatus 1 includes an operation switch 13.

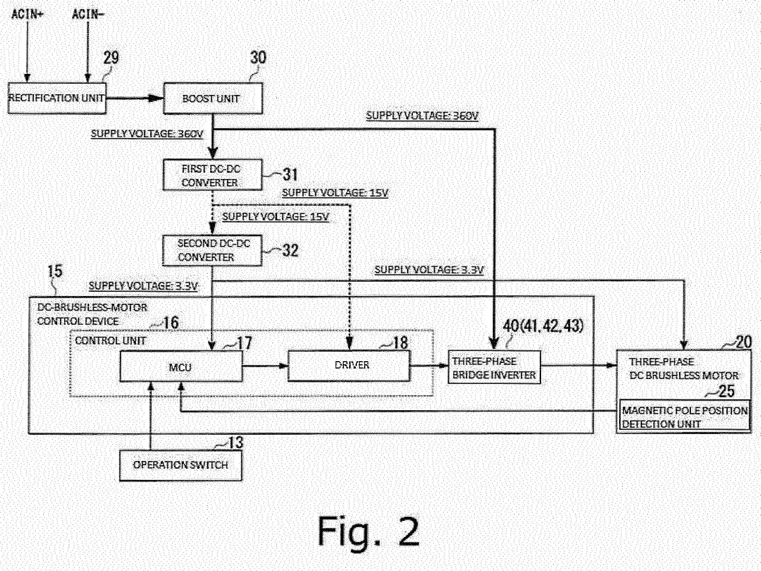

Fig. 2 is a diagram illustrating an example of a functional configuration of the suction apparatus 1 according to the present embodiment.

The suction apparatus 1 includes an operation switch 13, a DC-brushless-motor control device 15, a three-phase DC brushless motor 20, a rectification unit 29, a boost unit 30, a first DC-DC converter 31, and a second DC-DC converter 32. The DC-brushless-motor control device 15 includes a control unit 16 and a three-phase bridge inverter unit 40. The control unit 16 includes a micro controller unit (MCU) 17 and a driver 18. The MCU 17 includes an operation detection unit (not illustrated) that detects an operation of the operation switch 13. The three-phase DC brushless motor 20 includes a magnetic pole position detection unit 25.

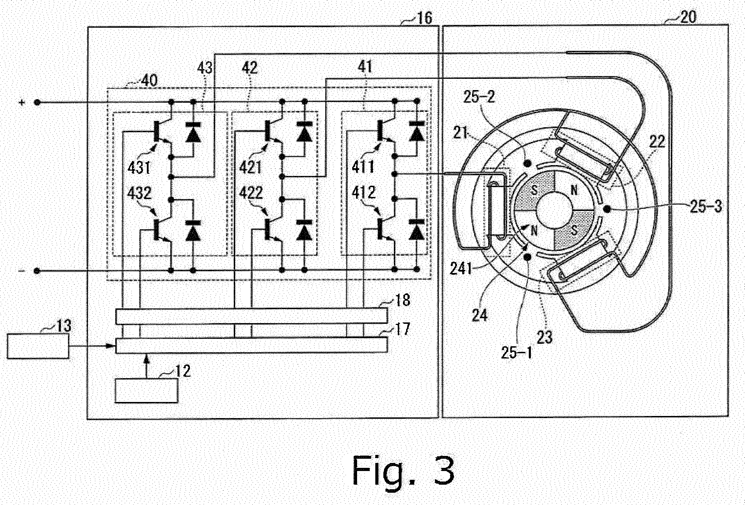

Fig. 3 is a diagram illustrating an example of configurations of the three-phase bridge inverter unit 40 and the three-phase DC brushless motor 20 that are provided in the suction apparatus 1 according to the present embodiment.

The three-phase bridge inverter unit 40 includes an arm 41, an arm 42, and an arm 43. The arm 41 includes a field-effect transistor 411 and a field-effect transistor 412. The arm 42 includes a field-effect transistor 421 and a field-effect transistor 422. The arm 43 includes a field-effect transistor 431 and a field-effect transistor 432. More specifically, the three-phase bridge inverter unit 40 includes arms with each of phases, which are the first-phase arm 41, the second-phase arm 42, and the third-phase arm 43, each of which switching elements are connected to each other in series, and each of which a connection point between the switching elements is connected to one end of each of windings 21, 22, and 23.

The three-phase DC brushless motor 20 includes a winding 21, a winding 22, a winding 23, a rotor 24, a magnetic pole position detection unit 25-1, a magnetic pole position detection unit 25-2, a magnetic pole position detection unit 25-3, and a permanent magnet 241. The magnetic pole position detection unit 25 is a generic name of the magnetic pole position detection unit 25-1, the magnetic pole position detection unit 25-2, and the magnetic pole position detection unit 25-3. Hereinafter, as long as there is no need to distinguish the magnetic pole position detection unit 25-1, the magnetic pole position detection unit 25-2, and the magnetic pole position detection unit 25-3, the magnetic pole position detection units are collectively referred to as the magnetic pole position detection unit 25.

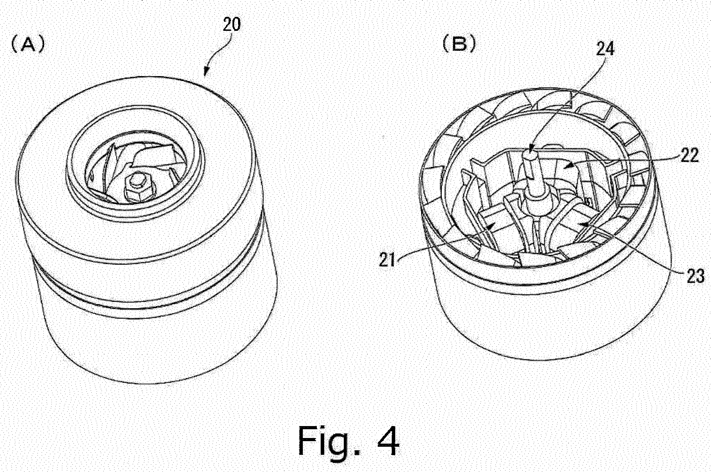

Fig. 4 is a diagram illustrating an example of a structure of the three-phase DC brushless motor 20.

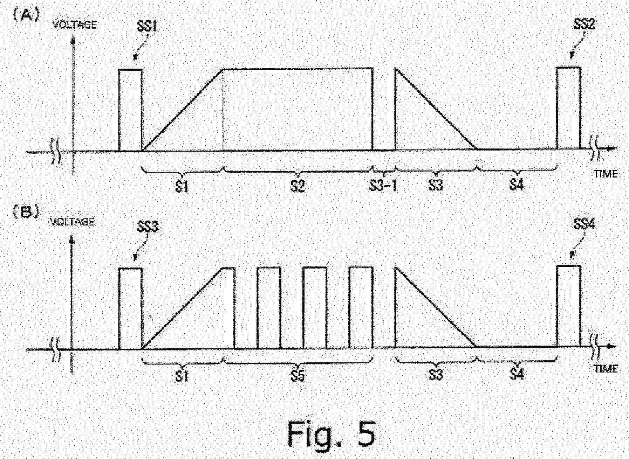

Fig. 5 is a diagram illustrating an example of a voltage waveform for controlling the field-effect transistor 411, the field-effect transistor 421, and the field-effect transistor 431 by the three-phase bridge inverter unit 40. Each of the field-effect transistor 411, the field-effect transistor 421, and the field-effect transistor 431 is an example of a first switching element. In addition, each of the field-effect transistor 412, the field-effect transistor 422, and the field-effect transistor 432 is an example of a second switching element.

Hereinafter, as long as there is no need to distinguish the field-effect transistor 411, the field-effect transistor 421, and the field-effect transistor 431, the field-effect transistors are collectively referred to as the first switching element. Hereinafter, as long as there is no need to distinguish the field-effect transistor 412, the field-effect transistor 422, and the field-effect transistor 432, the field-effect transistors are collectively referred to as the second switching element.

Fig. 5(A) is an example of a voltage waveform for controlling the first switching element by the three-phase bridge inverter unit 40 in a case where a rotation speed of the rotor 24 provided in the three-phase DC brushless motor 20 is equal to or higher than a predetermined rotation speed. The rotation speed of the rotor 24 is calculated by the MCU 17 based on a magnetic pole position detected by the magnetic pole position detection unit 25. In a case where the rotation speed of the rotor 24 is equal to or higher than the predetermined rotation speed, the three-phase bridge inverter unit 40 controls a conduction state of the first switching element based on a plurality of states including a first state S1, a second state S2, a third-first state S3-1, a third state S3, and a fourth state S4, in order from a time point when the magnetic pole position detected by the magnetic pole position detection unit 25 reaches a reference position.

In the first state S1, both of the first switching element and the second switching element are in an OFF state. In the second state S2, the first switching element is maintained in an ON state, and the second switching element is maintained in the OFF state. In the third-first state S3-1, the first switching element is maintained in the OFF state, and the second switching element is maintained in the ON state. In the third state S3, both of the first switching element and the second switching element are in the OFF state. In the fourth state S4, the first switching element is maintained in the OFF state, and the second switching element is maintained in the ON state. Hereinafter, the control of the first switching element according to the voltage waveform illustrated in Fig. 5(A) is referred to as single pulse control. The DC-brushless-motor control device 15 can reduce a switching loss by the single pulse control.

Fig. 5(B) is an example of a voltage waveform for controlling the first switching element by the three-phase bridge inverter unit 40 in a case where a rotation speed of the rotor 24 provided in the three-phase DC brushless motor 20 is less than a predetermined rotation speed. In this example, the predetermined rotation speed is 20000 revolution per minutes (r/m). In a case where the rotation speed of the rotor 24 is less than the predetermined rotation speed, the three-phase bridge inverter unit 40 controls the conduction state of the first switching element based on the plurality of states including the first state S1, a fifth state S5, the third state S3, and the fourth state S4, in order from the time point when the magnetic pole position detected by the magnetic pole position detection unit 25 reaches the reference position. In the fifth state S5, the first switching element is alternately switched between the ON state and the OFF state while the second switching element is maintained in the OFF state. Hereinafter, the control of the first switching element according to the voltage waveform illustrated in Fig. 5(B) is referred to as pulse width modulation (PWM) control.

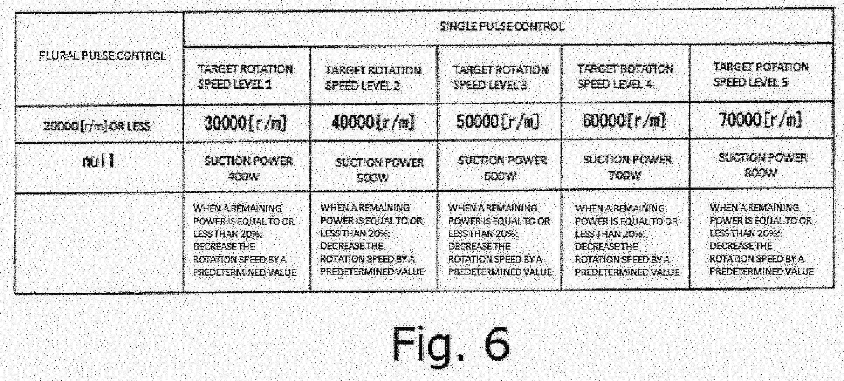

Fig. 6 is a diagram illustrating an example of a relationship between a target rotation speed and the rotation speed of the rotor 24 that the MCU 17 controls by using the three-phase bridge inverter unit 40. The MCU 17 controls the first switching element according to the voltage waveform illustrated in Fig. 5(B) by using the three-phase bridge inverter unit 40 during a period for which the calculated rotation speed of the rotor 24 is less than the predetermined rotation speed. On the other hand, the MCU 17 controls the first switching element according to the voltage waveform illustrated in Fig. 5(A) by using the three-phase bridge inverter unit 40 in a case where the calculated rotation speed of the rotor 24 is equal to or higher than the predetermined rotation speed. Thereby, the DC-brushless-motor control device 15 can achieve both of controllability and efficiency by performing the PWM control with high controllability in a low speed range and the single pulse control with high efficiency in a high speed range.

Based on an operation received by the operation switch 13, the MCU 17 reads information indicating a target rotation speed level corresponding to the operation from the storage unit 12. The target rotation speed level has, for example, five levels of level 1 to level 5. Each of the target rotation speed level is associated with suction power of the suction apparatus 1 according to each of the target rotation speed. The MCU 17 matches the calculated rotation speed of the rotor 24 with the target rotation speed which is read by controlling the first switching element by using the three-phase bridge inverter unit 40. Thereby, the DC-brushless-motor control device 15 can control the three-phase DC brushless motor 20 according to the rotation speed level suitable for a use condition of the suction apparatus 1. For example, in a case where the suction apparatus 1 is a vacuum cleaner, the DC-brushless-motor control device 15 can control the three-phase DC brushless motor 20 according to the rotation speed level suitable for a condition of a floor surface such as a floor, a mat, a carpet, or the like.

When changing the rotation speed of the rotor 24 according to the target rotation speed level, the MCU 17 changes a duration time of the second state in the single pulse control according to the target rotation speed of the rotor 24. Thereby, the DC-brushless-motor control device 15 can control the rotation speed of the rotor 24 in the single pulse control. Here, the duration time means a time that changes according to the rotation speed of the rotor 24, and does not mean an absolute time. In addition, when changing the duration time of the second state, the MCU 17 performs a control such that the first switching element is switched and the second switching element is not switched.

In a case where the suction apparatus 1 is driven by a secondary battery and a remaining power of the secondary battery is equal to or less than a predetermined threshold value, the MCU 17 decreases the target rotation speed by a predetermined value. The predetermined threshold value may be a value indicating a specific remaining power, and may be a predetermined percentage. In this example, the predetermined threshold value is a predetermined percentage. The predetermined percentage is, for example, 20%. Thereby, the DC-brushless-motor control device 15 can increase a usable time of the suction apparatus 1 in a case where the remaining power of the secondary battery is low. In addition, in a case where the suction apparatus 1 is driven by a secondary battery and a remaining power of the secondary battery is equal to or less than a predetermined threshold value, the MCU 17 may perform another processing such as processing of maintaining the target rotation speed with a predetermined value. Thereby, the DC-brushless-motor control device 15 can change a usable time of the suction apparatus 1 or a suction force of the suction apparatus 1 in a case where the remaining power of the secondary battery is low.

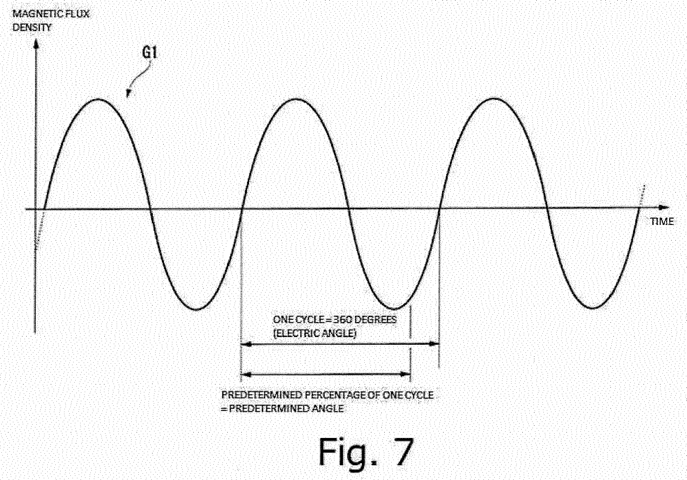

Fig. 7 is a diagram illustrating an example of a cycle of movement of the magnetic pole position detected by the magnetic pole position detection unit 25. The MCU 17 determines whether or not to acquire a signal indicating a magnetic pole position supplied from the magnetic pole position detection unit 25 as a signal to be used for determination of the magnetic pole position, based on a cycle of movement of the magnetic pole position detected by the magnetic pole position detection unit 25. In Fig. 7, a time required for one cycle of electric angles changes according to the rotation speed of the rotor 24. Specifically, the time required for one cycle of electric angles in a case where the rotor 24 rotates at a high speed is shorter than the time required for that in a case where the rotor 24 rotates at a low speed. In addition, when a change rate of the rotation speed of the rotor 24 is within a predetermined range, a change in the time required for one cycle of electric angles is also within a predetermined range. In other words, in a case where the rotor 24 rotates at a high speed of approximately 20000 r/m or more, when a very short period of time extent to which the rotor 24 rotates several times elapses, the change in the time required for one cycle of electric angles is extremely small. Therefore, by calculating the time required for one cycle of electric angles, the MCU 17 can estimate a width of the time required for one cycle of electric angles after an elapse of a very short period of time from the calculated timing. That is, the MCU 17 can estimate which timing the signal indicating the magnetic pole position occurs. The MCU 17 determines that the signal indicating the magnetic pole position occurred at a timing within the width of the estimated time required for one cycle of electric angles, among the signals indicating the magnetic pole positions, is non-noise. The MCU 17 determines to acquire the signal indicating the magnetic pole position and determined as non-noise, as a signal to be used for determination of the magnetic pole position. In addition, the MCU 17 determines that the signal indicating the magnetic pole position occurred at a timing out of the width of the estimated time required for one cycle of electric angles, among the signals indicating the magnetic pole positions, is noise. The MCU 17 determines not to acquire the signal indicating the magnetic pole position and determined as noise, as a signal to be used for determination of the magnetic pole position.

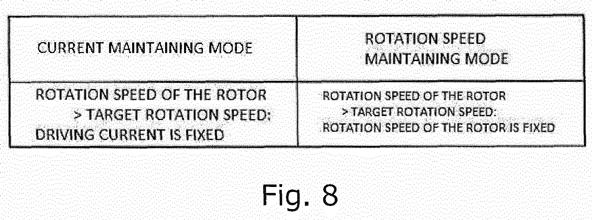

In addition, the MCU 17 can perform a feedback control of the rotation speed of the rotor 24 based on the cycle of movement of the magnetic pole position detected by the magnetic pole position detection unit 25 and the target rotation speed of the rotor 24. For example, the MCU 17 operates according to any operation mode of two operation modes illustrated in Fig. 8. Fig. 8 is a diagram illustrating two operation modes of the MCU 17. The two operation modes are, for example, a current maintaining mode and a rotation speed maintaining mode. In a case where the operation mode of the MCU 17 is the current maintaining mode, the MCU 17 controls the rotation speed of the rotor 24 by feedback of a current value supplied to each of the winding 21, the winding 22, and the winding 23. Specifically, the current value supplied to the winding 21, the winding 22, and the winding 23 is detected by a current sensor (not illustrated). In this case, the MCU 17 calculates a current value to be supplied to the winding 21, the winding 22, and the winding 23, based on a difference between a target current value and the current value of the winding 21, the winding 22, and the winding 23 that is detected by the current sensor. In addition, the MCU 17 supplies a current corresponding to the calculated current value, to the winding 21, the winding 22, and the winding 23.

In addition, in a case where the operation mode of the MCU 17 is the rotation speed maintaining mode, the MCU 17 controls the rotation speed of the rotor 24 by feedback of the rotation speed of the rotor 24. Specifically, the MCU 17 calculates the rotation speed of the rotor 24 based on the cycle of change of the magnetic pole position detected by the magnetic pole position detection unit 25. In addition, the MCU 17 calculates a voltage waveform for supplying a voltage to the winding 21, the winding 22, and the winding 23, based on a difference between a target rotation speed and the calculated rotation speed of the rotor 24. In addition, the MCU 17 supplies a current corresponding to the calculated voltage waveform, to the winding 21, the winding 22, and the winding 23. The MCU 17 controls the rotation speed of the rotor 24 in a case where the rotation speed of the rotor 24 that is indicated by the cycle of movement of the magnetic pole position detected by the magnetic pole position detection unit 25 exceeds the target rotation speed corresponding to the operation detected by the operation detection unit. Therefore, by the feedback, the DC-brushless-motor control device 15 can suppress heat generation due to an unintended increase in the rotation speed of the rotor 24 from the target rotation speed as a target upper limit value.

Here, in this example, the operation detected by the operation detection unit is an operation for selecting a level of the suction force of the suction apparatus. As illustrated in Fig. 6, information indicating the target rotation speed of the rotor 24 is stored in the storage unit by being divided into a plurality of rotation speed levels corresponding to suction force levels of the suction apparatus 1, the suction force level being indicated by the operation detected by the operation detection unit. The MCU 17 reads the information indicating the target rotation speed level corresponding to the suction force level according to the operation detected by the operation detection unit, from the storage unit 12. The MCU 17 matches the rotation speed of the rotor 24 with the target rotation speed which is read. Thereby, the DC-brushless-motor control device 15 can provide an operation using the suction force of the suction apparatus 1, to a user. The suction apparatus 1 is an example of a suction apparatus.

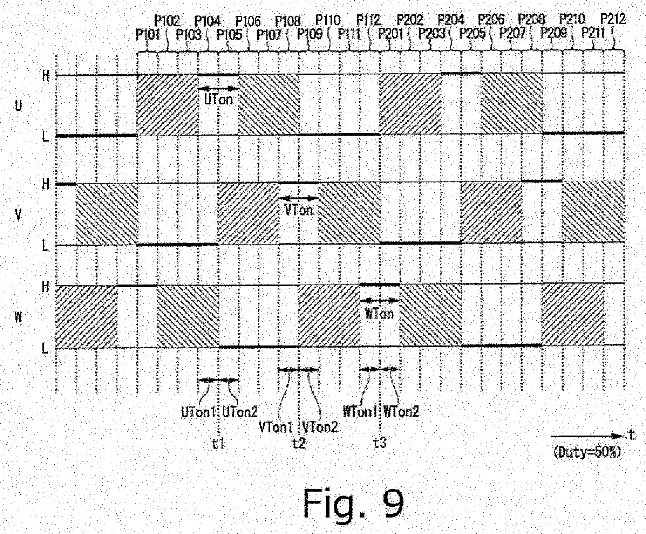

[Details of Single Pulse Control] Next, details of the single pulse control performed by the DC-brushless-motor control device 15 according to the present embodiment will be described with reference to Figs. 9 to 12.

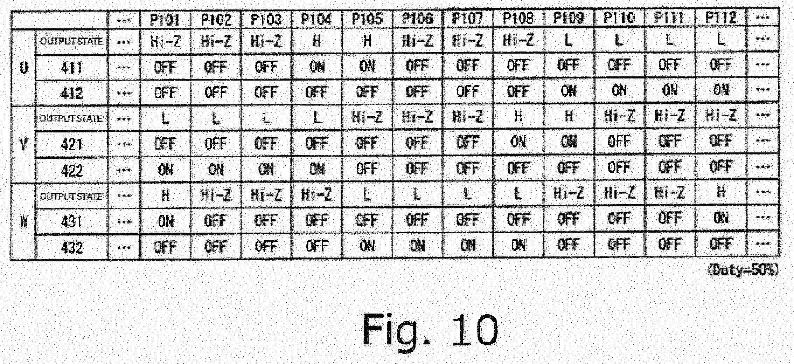

Fig. 9 is a waveform diagram illustrating an example of a waveform of the single pulse control by the DC-brushless-motor control device 15 according to the present embodiment. Fig. 10 is a table illustrating an example of control states of the arms by the DC-brushless-motor control device 15 according to the present embodiment. Figs. 9 and 10 illustrate an example of a case where driving duty of the three-phase DC brushless motor 20 by the DC-brushless-motor control device 15 is approximately 50%.

Based on the magnetic pole position detected by the magnetic pole position detection unit 25 that detects the magnetic pole position of the rotor 24 of the three-phase DC brushless motor 20, the control unit 16 controls each of the conduction state of the first switching element provided on one side of the connection point among the switching elements and the conduction state of the second switching element provided on the other side of the connection point among the switching elements, the switching elements being included in each of the arms 41, 42, and 43 with each of phases. That is, the control unit 16 of the DC-brushless-motor control device 15 controls output potentials with each of phases by switching each of the arms 41, 42, and 43 with each of phases, which are included in the three-phase bridge inverter unit 40, between an H state, an L state, and an Hi-Z state. Here, the H state refers to a case where the first switching element of each of the arms with each of phases is in the ON state and the second switching element of each of the arms with each of phases is in the OFF state. In addition, the L state refers to a case where the first switching element of each of the arms with each of phases is in the OFF state and the second switching element of each of the arms with each of phases is in the ON state. In addition, the Hi-Z state refers to a case where the first switching element and the second switching element of each of the arms with each of phases are in the OFF state. Here, the U-phase output potential is a potential with respect to a reference potential of the connection portion between the field-effect transistor 411 and the field-effect transistor 412, that is, the midpoint of the arm 41. Here, the V-phase output potential is a potential with respect to a reference potential of the connection portion between the field-effect transistor 421 and the field-effect transistor 422, that is, the midpoint of the arm 42. Here, the W-phase output potential is a potential with respect to a reference potential of the connection portion between the field-effect transistor 431 and the field-effect transistor 432, that is, the midpoint of the arm 43.

A more specific example of the control operation by the control unit 16 will be described for each section illustrated in Figs. 9 and 10. Here, sections from a section P101 to a section P112 correspond to one cycle of electric angles of the three-phase DC brushless motor 20. In addition, sections from a section P201 to a section P212 correspond to one cycle of electric angles of the three-phase DC brushless motor 20. In this example, although a case where the respective sections are divided at equal intervals on a time axis will be described, the respective sections may not necessarily be divided at equal intervals on the time axis.

In the sections corresponding to a first cycle of the electric angles, that is, in the respective sections from the section P101 to the section P112, the control unit 16 controls the arms with each of phases as follows.

In the section P101, the control unit 16 switches the U-phase arm 41 into the Hi-Z state, switches the V-phase arm 42 into the L state, and switches the W-phase arm 43 into the H state. In the section P101, the control unit 16 causes a driving current to flow from the W-phase arm 43 to the V-phase arm 42 via the winding 23 and the winding 22.

In a section P102 and a section P103, the control unit 16 switches the U-phase arm 41 into the Hi-Z state, switches the V-phase arm 42 into the L state, and switches the W-phase arm 43 into the Hi-Z state. In the section P102 and the section P103, the control unit 16 does not supply the driving current to any winding.

In a section P104, the control unit 16 switches the U-phase arm 41 into the H state, switches the V-phase arm 42 into the L state, and switches the W-phase arm 43 into the Hi-Z state. In the section P104, the control unit 16 causes the driving current to flow from the U-phase arm 41 to the V-phase arm 42 via the winding 21 and the winding 22.

In a section P105, the control unit 16 switches the U-phase arm 41 into the H state, switches the V-phase arm 42 into the Hi-Z state, and switches the W-phase arm 43 into the L state. In the section P105, the control unit 16 causes the driving current to flow from the U-phase arm 41 to the W-phase arm 43 via the winding 21 and the winding 23.

In a section P106 and a section P107, the control unit 16 switches the U-phase arm 41 into the Hi-Z state, switches the V-phase arm 42 into the Hi-Z state, and switches the W-phase arm 43 into the L state. In the section P106 and the section P107, the control unit 16 does not supply the driving current to any winding.

In a section P108, the control unit 16 switches the U-phase arm 41 into the Hi-Z state, switches the V-phase arm 42 into the H state, and switches the W-phase arm 43 into the L state. In the section P108, the control unit 16 causes the driving current to flow from the V-phase arm 42 to the W-phase arm 43 via the winding 22 and the winding 23.

In a section P109, the control unit 16 switches the U-phase arm 41 into the L state, switches the V-phase arm 42 into the H state, and switches the W-phase arm 43 into the Hi-Z state. In the section P109, the control unit 16 causes the driving current to flow from the V-phase arm 42 to the U-phase arm 41 via the winding 22 and the winding 21.

In a section P110 and a section P111, the control unit 16 switches the U-phase arm 41 into the L state, switches the V-phase arm 42 into the Hi-Z state, and switches the W-phase arm 43 into the Hi-Z state. In the section P110 and the section P111, the control unit 16 does not supply the driving current to any winding.

In a section P112, the control unit 16 switches the U-phase arm 41 into the L state, switches the V-phase arm 42 into the Hi-Z state, and switches the W-phase arm 43 into the H state. In the section P112, the control unit 16 causes the driving current to flow from the W-phase arm 43 to the U-phase arm 41 via the winding 23 and the winding 21.

In the sections corresponding to a second cycle of the electric angles, that is, in the respective sections from the section P201 to the section P212, the control unit 16 also controls the arms with each of phases in the same manner as that in the sections from the section P101 to the section P112.

The sections from the section P101 to the section P103 illustrated in Fig. 9 correspond to the first state S1 illustrated in Fig. 5. In addition, the sections of the section P104 and the section P105 illustrated in Fig. 9 correspond to the second state S2 illustrated in Fig. 5. In addition, the sections from the section P106 to the section P108 illustrated in Fig. 9 correspond to the third state S3 illustrated in Fig. 5. In addition, the sections from the section P109 to the section P112 illustrated in Fig. 9 correspond to the fourth state S4 illustrated in Fig. 5.

Since the third-first state S3-1 illustrated in Fig. 5 is shorter in time than the other states, the third-first state S3-1 is not illustrated in Fig. 9.

[Control Timing of Arms With Each of Phases in Single Pulse Control] Next, a relationship between the magnetic pole position detected by the magnetic pole position detection unit 25 and a control timing of each of the arms with each of phases by the control unit 16 will be described. As an example, the control unit 16 changes the arms with each of phases into the H state in accordance with a rise timing of the magnetic pole position detection signal which is output from the magnetic pole position detection unit 25 for each of phases.

Specifically, the control unit 16 changes the U-phase arm 41 into the H state in accordance with a rise timing of the magnetic pole position detection signal which is output from the U-phase magnetic pole position detection unit 25-1. That is, the control unit 16 controls the arms with each of phases by matching the rising timing of the magnetic pole position detection signal which is output from the U-phase magnetic pole position detection unit 25-1 with a start timing of the section P104 illustrated in Fig. 9.

In addition, the control unit 16 changes the V-phase arm 42 into the H state in accordance with a rise timing of the magnetic pole position detection signal which is output from the V-phase magnetic pole position detection unit 25-2. That is, the control unit 16 controls the arms with each of phases by matching the rising timing of the magnetic pole position detection signal which is output from the V-phase magnetic pole position detection unit 25-2 with a start timing of the section P108 illustrated in Fig. 9.

In addition, the control unit 16 changes the W-phase arm 43 into the H state in accordance with a rise timing of the magnetic pole position detection signal which is output from the W-phase magnetic pole position detection unit 25-3. That is, the control unit 16 controls the arms with each of phases by matching the rising timing of the magnetic pole position detection signal which is output from the W-phase magnetic pole position detection unit 25-3 with a start timing of the section P112 illustrated in Fig. 9.

That is, the control unit 16 changes the arm into the Hi-Z state, the H state, the Hi-Z state, and the L state in this order, in accordance with the time point when the magnetic pole position detected by the magnetic pole position detection unit 25 reaches the reference position.

As described above, the control unit 16 changes the arm into the Hi-Z state, the H state, the Hi-Z state, and the L state in this order for each cycle of the electric angles of the three-phase DC brushless motor 20. That is, the control unit 16 changes the arm into the Hi-Z state, the H state, the Hi-Z state, and the L state, in order from the time point when the magnetic pole position detected by the magnetic pole position detection unit 25 reaches the reference position, for each cycle of the electric angles of the three-phase DC brushless motor 20. In other words, the control unit 16 controls the conduction states of the switching elements of the arm into the first state, the second state, the third state, and the fourth state, in order from the time point when the magnetic pole position detected by the magnetic pole position detection unit 25 reaches the reference position, for each cycle of the electric angles of the three-phase DC brushless motor 20.

[Outline of Pulse Width Variation Control in Single Pulse Control] Next, an example of a case where the control unit 16 variably controls the rotation speed of the three-phase DC brushless motor 20 by using the single pulse control will be described with reference to Fig. 9. In the example illustrated in Fig. 9, in the section P104 and the section P105, the control unit 16 changes the U-phase arm 41 into the H state. In the following description, a period during which the U-phase arm 41 is in the H state is referred to as a period UTon. In addition, a period during which the V-phase arm 42 is in the H state is referred to as a period VTon, and a period during which the W-phase arm 43 is in the H state is referred to as a period WTon. In a case where there is no need to distinguish each of phases, the period during which the arm is in the H state is also referred to as a period Ton.

The control unit 16 controls the rotation speed of the three-phase DC brushless motor 20 by changing a duration time of the period Ton. Specifically, in a case of increasing the rotation speed of the three-phase DC brushless motor 20, the control unit 16 increases the duration time of the period UTon. In addition, in a case of decreasing the rotation speed of the three-phase DC brushless motor 20, the control unit 16 decreases the duration time of the period UTon. In addition, the control unit 16 controls the rotation speed of the three-phase DC brushless motor 20 by changing the duration time of the period VTon and the duration time of the period WTon in the same manner as the control of the duration time of the period UTon.

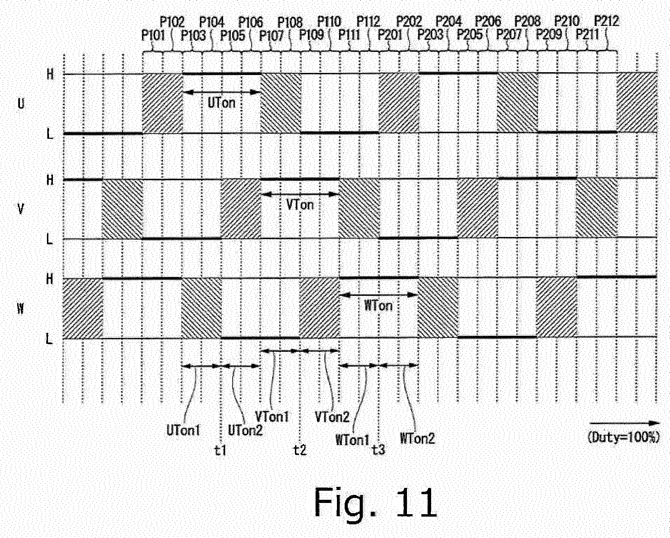

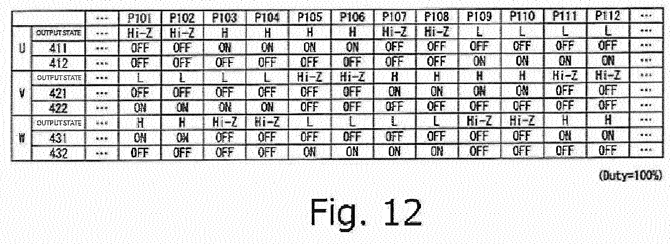

[Example in a Case of Maximum Pulse Width (100% Driving Duty)] Here, as an example, a specific example in a case where the control unit 16 sets the duration time of the period Ton to a maximum value, that is, in a case where the control unit 16 sets the driving duty to 100%, will be described with reference to Figs. 11 and 12.

Fig. 11 is a waveform diagram illustrating another example of the waveform of the single pulse control by the DC-brushless-motor control device 15 according to the present embodiment. Fig. 12 is a table illustrating another example of the control states of the arms by the DC-brushless-motor control device 15 according to the present embodiment. Figs. 11 and 12 illustrate an example of a case where the driving duty of the three-phase DC brushless motor 20 by the DC-brushless-motor control device 15 is approximately 100%. In addition, each section illustrated in Figs. 11 and 12 corresponds to the section with the same reference numeral illustrated in Figs. 9 and 10.

In the sections corresponding to a first cycle of the electric angles, that is, in the respective sections from the section P101 to the section P112, the control unit 16 controls the arms with each of phases as follows.

Here, in a case of setting the duration time of the period Ton to a maximum value, for the U-phase, the control unit 16 increases a time during which the U-phase arm 41 is maintained in the H state to a maximum value, and decreases a time during which the U-phase arm 41 is maintained in the Hi-Z state to a minimum value. In this case, for the V-phase, similarly to the U-phase, the control unit 16 increases a time during which the V-phase arm 42 is maintained in the H state to a maximum value, and decreases a time during which the V-phase arm 42 is maintained in the Hi-Z state to a minimum value. In this case, for the W-phase, similarly to the U-phase and the V-phase, the control unit 16 increases a time during which the W-phase arm 43 is maintained in the H state to a maximum value, and decreases a time during which the W-phase arm 43 is maintained in the Hi-Z state to a minimum value.

In each section, the control states of the arms by the control unit 16 are the same as those in the case illustrated in Figs. 9 and 10. That is, the control unit 16 controls the conduction states of the switching elements based on a plurality of states including a first first-phase driving state, a second first-phase driving state, a first second-phase driving state, a second second-phase driving state, a first third-phase driving state, and a second third-phase driving state, in order from the time point when the magnetic pole position detected by the magnetic pole position detection unit 25 reaches the reference position. Here, in the first first-phase driving state, the first switching element of the first-phase arm 41 is in the ON state, the second switching element of the first-phase arm 41 is in the OFF state, the first switching element of the second-phase arm 42 is in the OFF state, the second switching element of the second-phase arm 42 is in the ON state, and both of the first switching element and the second switching element of the third-phase arm 43 are in the OFF state. In the second first-phase driving state, the first switching element of the first-phase arm 41 is in the ON state, the second switching element of the first-phase arm 41 is in the OFF state, both of the first switching element and the second switching element of the second-phase arm 42 are in the OFF state, the first switching element of the third-phase arm 43 is in the OFF state, and the second switching element of the third-phase arm 43 is in the ON state. In the first second-phase driving state, both of the first switching element and the second switching element of the first-phase arm 41 are in the OFF state, the first switching element of the second-phase arm 42 is in the ON state, the second switching element of the second-phase arm 42 is in the OFF state, the first switching element of the third-phase arm 43 is in the OFF state, and the second switching element of the third-phase arm 43 is in the ON state. In the second second-phase driving state, the first switching element of the first-phase arm 41 is in the OFF state, the second switching element of the first-phase arm 41 is in the ON state, the first switching element of the second-phase arm 42 is in the ON state, the second switching element of the second-phase arm 42 is in the OFF state, and both of the first switching element and the second switching element of the third-phase arm 43 are in the OFF state. In the first third-phase driving state, the first switching element of the first-phase arm 41 is in the OFF state, the second switching element of the first-phase arm 41 is in the ON state, both of the first switching element and the second switching element of the second-phase arm 42 are in the OFF state, the first switching element of the third-phase arm 43 is in the ON state, and the second switching element of the third-phase arm 43 is in the OFF state.
In the second third-phase driving state, both of the first switching element and the second switching element of the first-phase arm 41 are in the OFF state, the first switching element of the second-phase arm 42 is in the OFF state, the second switching element of the second-phase arm 42 is in the ON state, the first switching element of the third-phase arm 43 is in the ON state, and the second switching element of the third-phase arm 43 is in the OFF state.

As described above, the control unit 16 controls the rotation speed of the three-phase DC brushless motor 20 by changing a pulse width in the single pulse control. That is, the control unit 16 controls the rotation speed of the three-phase DC brushless motor 20 by changing a ratio between the duration time of the period Ton and a duration time of the section for which each of the arms with each of phases is in the Hi-Z state.

As described above, during the period Ton, the control unit 16 continues to supply the driving current to the windings of the three-phase DC brushless motor 20 by maintaining the arm in the H state.

On the other hand, in a case of PWM control in the related art, during a period corresponding to the period Ton, the arm is alternately switched between the H state, the L state, and the Hi-Z state based on a switching speed according to a predetermined PWM frequency. In other words, in the case of the PWM control in the related art, the arm is not maintained in the H state during the period corresponding to the period Ton. That is, the single pulse control performed by the control unit 16 according to the present embodiment is different from the PWM control in the related art in that the arm is maintained in the H state during the period Ton.

[Details of Pulse Width Variation Control in Single Pulse Control] Next, details of the pulse width variation control by the control unit 16 will be described. Here, the period Ton is divided into a first half portion and a second half portion. Specifically, the period UTon is divided into a period UTon1 on the section P104 side and a period UTon2 on the section P105 side when a switching time t1 between the section P104 and the section P105 is set as a boundary. The period VTon is divided into a period VTon1 on the section P108 side and a period VTon2 on the section P109 side when a switching time t2 between the section P108 and the section P109 is set as a boundary. The period WTon is divided into a period WTon1 on the section P112 side and a period WTon2 on the section P201 side when a switching time t3 between the section P112 and the section P201 is set as a boundary.

In a case of changing the pulse width, the control unit 16 increases or decreases the pulse width by matching the first half portion and the second half portion of the period Ton. Specifically, in a case of increasing the pulse width, the control unit 16 increases the pulse width by matching an increase width of the first half portion of the period Ton with an increase width of the second half portion of the period Ton. In addition, in a case of decreasing the pulse width, the control unit 16 decreases the pulse width by matching a decrease width of the first half portion of the period Ton with a decrease width of the second half portion of the period Ton. More specifically, for the U-phase, the control unit 16 increases or decreases the pulse width by matching a length of the period UTon1 with a length of the period UTon2. In addition, for the V-phase, the control unit 16 increases or decreases the pulse width by matching a length of the period VTon1 with a length of the period VTon2. In addition, for the W-phase, the control unit 16 increases or decreases the pulse width by matching a length of the period WTon1 with a length of the period WTon2. That is, the control unit 16 changes the pulse width by using each of the time t1 for the U-phase, the time t2 for the V-phase, and the time t3 for the W-phase, as a center.

### Reference Signs List

1: SUCTION APPARATUS
12: STORAGE UNIT
13: OPERATION SWITCH
15: DC-BRUSHLESS-MOTOR CONTROL DEVICE
16: CONTROL UNIT
17: MCU
18: DRIVER
20: THREE-PHASE DC BRUSHLESS MOTOR
21, 22, 23: WINDING
24: ROTOR
25, 25-1, 25-2, 25-3: MAGNETIC POLE POSITION DETECTION UNIT
29: RECTIFICATION UNIT
30: BOOST UNIT
31: FIRST DC-DC CONVERTER
32: SECOND DC-DC CONVERTER
40: THREE-PHASE BRIDGE INVERTER UNIT
241: PERMANENT MAGNET
411, 412, 421, 422, 431, 432: FIELD-EFFECT TRANSISTOR

## Claims

1. A DC-brushless-motor control device that supplies a current to windings of a stator of a three-phase DC brushless motor, the device comprising:
a three-phase bridge inverter unit that includes arms with each of phases, each of which switching elements are connected to each other in series and each of which a connection point between the switching elements is connected to one end of each of the windings; and
a control unit that controls each of a conduction state of a first switching element among the switching elements and a conduction state of a second switching element among the switching elements based on a magnetic pole position detected by a magnetic pole position detection unit which detects a magnetic pole position of a rotor of the three-phase DC brushless motor, the first switching element being provided on one side of the connection point, the second switching element being provided on the other side of the connection point, and the switching elements being included in each of the arms,
wherein the control unit controls the conduction states of the switching elements based on a plurality of states including a first state, a second state, a third state, and a fourth state, in order from a time point when the magnetic pole position detected by the magnetic pole position detection unit reaches a reference position, the first state in which both of the first switching element and the second switching element are in an OFF state, the second state in which the first switching element is maintained in an ON state and the second switching element is maintained in the OFF state, the third state in which both of the first switching element and the second switching element are in the OFF state, and the fourth state in which the first switching element is maintained in the OFF state and the second switching element is maintained in the ON state.

2. The DC-brushless-motor control device according to Claim 1,
wherein the control unit controls the conduction states of the switching elements according to a fifth state instead of the second state in a case where a rotation speed of the rotor is less than a predetermined rotation speed, the fifth state in which the first switching element is alternately switched between the ON state and the OFF state while the second switching element is maintained in the OFF state.

3. The DC-brushless-motor control device according to Claim 2, further comprising:
a storage unit in which information indicating a target rotation speed of the rotor is stored for each level by being divided into a plurality of levels from a low rotation speed to a high rotation speed,
wherein the control unit controls the rotation speed of the rotor according to the target rotation speeds which are stored for each level in the storage unit.

4. The DC-brushless-motor control device according to Claim 3,
wherein the control unit performs a control according to the target rotation speed with a low rotation speed that is lower than the predetermined rotation speed among the target rotation speeds, based on the fifth state, and performs a control according to the target rotation speed with a high rotation speed that is equal to or higher than the predetermined rotation speed among the target rotation speeds, based on the second state, the target rotation speeds being stored for each level in the storage unit.

5. The DC-brushless-motor control device according to any one of Claims 1 to 3,
wherein the control unit changes a duration time of the second state according to the target rotation speed of the rotor.

6. The DC-brushless-motor control device according to any one of Claims 1 to 5,
wherein the control unit determines whether or not to acquire a signal indicating the magnetic pole position supplied from the magnetic pole position detection unit as a signal to be used for determination of the magnetic pole position, based on a cycle of movement of the magnetic pole position detected by the magnetic pole position detection unit.

7. The DC-brushless-motor control device according to any one of Claims 1 to 6,
wherein the control unit performs a feedback control of the rotation speed of the rotor based on the cycle of the movement of the magnetic pole position detected by the magnetic pole position detection unit and the target rotation speed of the rotor.

8. A DC-brushless-motor control device that supplies a current to windings of a stator of a three-phase DC brushless motor, the device comprising:
a three-phase bridge inverter unit that includes arms with each of phases, each of which switching elements are connected to each other in series and each of which a connection point between the switching elements is connected to one end of each of the windings; and
a control unit that controls each of a conduction state of a first switching element among the switching elements and a conduction state of a second switching element among the switching elements based on a magnetic pole position detected by a magnetic pole position detection unit which detects a magnetic pole position of a rotor of the three-phase DC brushless motor, the first switching element being provided on one side of the connection point, the second switching element being provided on the other side of the connection point, and the switching elements being included in each of the arms,
wherein the control unit controls the conduction states of the switching elements based on a first state, a second state, a third state, and a fourth state, for each cycle of electric angles of the three-phase DC brushless motor, in order from a time point when the magnetic pole position detected by the magnetic pole position detection unit reaches a reference position, the first state in which both of the first switching element and the second switching element are in an OFF state, the second state in which the first switching element is maintained in an ON state and the second switching element is maintained in the OFF state, the third state in which both of the first switching element and the second switching element are in the OFF state, and the fourth state in which the first switching element is maintained in the OFF state and the second switching element is maintained in the ON state.

9. The DC-brushless-motor control device according to Claim 8,
wherein the control unit changes the rotation speed of the rotor by changing a ratio between a duration time of the second state and a duration time of the first state and a duration time of the third state.

10. The DC-brushless-motor control device according to Claim 8 or 9,
wherein, in a case of increasing the duration time of the second state, the control unit decreases the duration time of the first state and the duration time of the third state by matching a decrease width in the duration time of the first state with a decrease width in the duration time of the third state, and
wherein, in a case of decreasing the duration time of the second state, the control unit increases the duration time of the first state and the duration time of the third state by matching an increase width in the duration time of the first state with an increase width in the duration time of the third state.

11. The DC-brushless-motor control device according to any one of Claims 8 to 10,
wherein, for a first phase, a second phase, and a third phase among the phases, during a period for which the first phase is in the second state, the control unit switches the second phase from the fourth state to the first state and switches the third phase from the third state to the fourth state.

12. A DC-brushless-motor control device that supplies a current to windings of a stator of a three-phase DC brushless motor, the device comprising:
a three-phase bridge inverter unit that includes arms with each of phases, which are a first-phase arm, a second-phase arm, and a third-phase arm, each of which switching elements are connected to each other in series and each of which a connection point between the switching elements is connected to one end of each of the windings; and
a control unit that controls each of a conduction state of a first switching element among the switching elements and a conduction state of a second switching element among the switching elements based on a magnetic pole position detected by a magnetic pole position detection unit which detects a magnetic pole position of a rotor of the three-phase DC brushless motor, the first switching element being provided on one side of the connection point, the second switching element being provided on the other side of the connection point, and the switching elements being included in each of the arms with each of phases,
wherein the control unit controls the conduction states of the switching elements based on a plurality of states including a first first-phase driving state, a second first-phase driving state, a first second-phase driving state, a second second-phase driving state, a first third-phase driving state, and a second third-phase driving state, in order from a time point when the magnetic pole position detected by the magnetic pole position detection unit reaches a reference position,
the first first-phase driving state in which the first switching element of the first-phase arm is in an ON state and the second switching element of the first-phase arm is in an OFF state, in which the first switching element of the second-phase arm is in the OFF state and the second switching element of the second-phase arm is in the ON state, and in which both of the first switching element and the second switching element of the third-phase arm are in the OFF state,
the second first-phase driving state in which the first switching element of the first-phase arm is in the ON state and the second switching element of the first-phase arm is in the OFF state, in which both of the first switching element and the second switching element of the second-phase arm are in the OFF state, and in which the first switching element of the third-phase arm is in the OFF state and the second switching element of the third-phase arm is in the ON state,
the first second-phase driving state in which both of the first switching element and the second switching element of the first-phase arm are in the OFF state, in which the first switching element of the second-phase arm is in the ON state and the second switching element of the second-phase arm is in the OFF state, and in which the first switching element of the third-phase arm is in the OFF state and the second switching element of the third-phase arm is in the ON state,
the second second-phase driving state in which the first switching element of the first-phase arm is in the OFF state and the second switching element of the first-phase arm is in the ON state, in which the first switching element of the second-phase arm is in the ON state and the second switching element of the second-phase arm is in the OFF state, and in which both of the first switching element and the second switching element of the third-phase arm are in the OFF state,
the first third-phase driving state in which the first switching element of the first-phase arm is in the OFF state and the second switching element of the first-phase arm is in the ON state, in which both of the first switching element and the second switching element of the second-phase arm are in the OFF state, and in which the first switching element of the third-phase arm is in the ON state and the second switching element of the third-phase arm is in the OFF state,
the second third-phase driving state in which both of the first switching element and the second switching element of the first-phase arm are in the OFF state, in which the first switching element of the second-phase arm is in the OFF state and the second switching element of the second-phase arm is in the ON state, and in which the first switching element of the third-phase arm is in the ON state and the second switching element of the third-phase arm is in the OFF state.
